Europäisches Patentamt

European Patent Office

Office européen des brevets

(19)

(11) EP 1 063 614 A2

(12) EUROPEAN PATENT APPLICATION

(43) Date of publication:
27.12.2000 Bulletin 2000/52

(51) Int Cl.⁷: G06T 7/00

(21) Application number: 00305266.9

(22) Date of filing: 21.06.2000

(84) Designated Contracting States:
AT BE CH CY DE DK ES FI FR GB GR IE IT LI LU
MC NL PT SE
Designated Extension States:
AL LT LV MK RO SI

(30) Priority: 22.06.1999 JP 17601199

(71) Applicant: The One Infinite Inc.
Wilmington, DE 19801 (US)

(72) Inventors:
• Quan, Long
  38330 Montbonnot (FR)
• Miyazawa, Takeo
  Mitaka-shi, Tokyo 181-0013 (JP)
• Lhuiller, Maxime
  38400 Saint Martin D'heres (FR)

(74) Representative: Brown, Kenneth Richard et al
R.G.C. Jenkins & Co.
26 Caxton Street
London SW1H 0RJ (GB)

(54) **Apparatus for using a plurality of facial images from different viewpoints to generate a facial image from a new viewpoint, method thereof, application apparatus and storage medium**

(57) Seed matches are found between a plurality of images of a common object. The present invention simplifies the implementation of the morphing process. The present invention is a seed finding unit comprising a feature point detection unit for detecting feature points from said plurality of images; a correlation calculating unit for calculating the correlation between the feature points in said plurality of images and for calculating combinations of said feature points; a matching unit for removing combinations of said feature points that have low probability based on the condition of an image seen from a plurality of viewpoints; a camera orientation determining unit for determining the position of said plurality of viewpoints and the direction of viewing rays; a match propagation unit for selecting those combinations of said feature points that are geometrically and statistically highly reliable under the geometrical constraints of the viewing rays, and for adjusting the analysis range of the images of said object. By using the constraints of the viewpoint position and direction of viewing rays, seed match finding with high precision is possible.

FIG. 2

**Description**

Background of the Invention

Field of the Invention

The present invention relates to an apparatus that, when it receives a plurality of images from different viewpoints and a certain object is common to these images, and/or it receives a plurality of images of one or more objects, generates a new image of the object(s).

Description of the Related Art

One known method of image processing is the morphing technique. Morphing is a computer graphics (CG) technology developed in Hollywood, U.S.A. According to this method, two different images are used, for example, images of the faces of two persons, and one of the images is gradually changed on the screen to the other image, thereby providing a series of images showing such change. Using the morphing technology, it is possible to create a series of images in which, for example, a white tiger turns into a young woman.

When two images A and B are given, the morphing process is roughly as follows. First, the corresponding feature points between image A and image B are obtained (e.g., eye and eye, nose and nose). This process is normally performed by an operator. When the correspondences are found, feature point p of image A is gradually changed in a time-consuming process to feature point q of image B, resulting in the image series as described above.

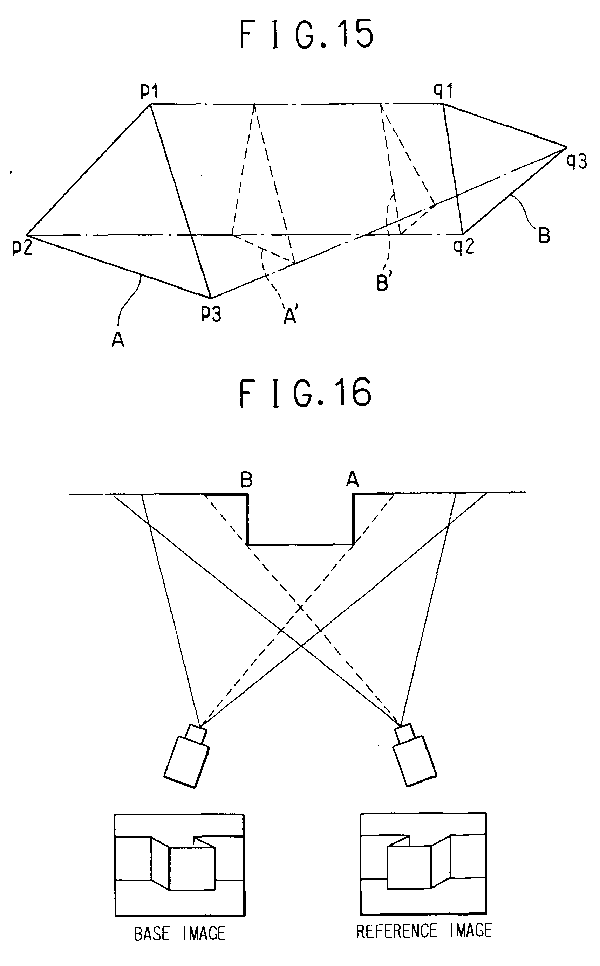

In CG, an image is generally made of a large number of triangular elements. Therefore, morphing is performed by changing the triangle of feature point p in image A to the triangle of feature point q in image B while maintaining the correspondence between them. This will be described further with reference to Fig. 15. In this figure, triangle A is part of image A, and triangle B is part of image B. The apexes p1, p2, p3 of triangle A each correspond to apexes q1, q2 and q3 of triangle B. In order to convert triangle A to triangle B, the differences between p1 and q1, p2 and q2, and p3 and q3 are calculated, and then respectively added to each of the apexes p1, p2, p3 of triangle A. By adding all (100%) of these differences, triangle A is converted to triangle B. It is also possible to add portions of these differences instead of the whole differences, e.g., 30% or 60% thereof. In such case, the intermediate figures between triangle A and triangle B can be obtained. For example, in Fig. 15, triangle A' is a model example of an addition of 30% of the difference, and triangle B' is a model example of an addition of 60% of the difference.

In conventional morphing processing, it was necessary to manually input the correspondence between several hundred feature points, and at the same time implement the actual processing in order to check whether such relation was appropriate, requiring the trial and error method.

Summary of the Invention

Therefore, it is an object of the present invention to provide an apparatus for automatically calculating the correspondence as required for morphing and other processes, and the method thereof. The present invention is particularly outstanding in the processing of occlusions, which were never completely solved in conventional morphing technologies, and is able to analyze and process the depth relations adequately. It is a characteristic of the present invention in requiring no depth information for such processing. The occlusion issue is that when the same object is seen from different viewpoints, as shown in Fig. 16, the visible portions seen from the different viewpoints differ due to the difference in the viewpoints. In Fig. 16, portions A and B are respectively shown in the image of only one camera. Conventionally, occluded portions were relatively small within the whole image, so the occlusion issue was ignored. However, in order to provide high-quality images, this issue must be taken into consideration.

Another object of the present invention is to provide an apparatus for generating an image of an object from a new viewpoint using the calculated correspondence, and the method thereof.

The present invention is an image generating apparatus for generating a new image from a plurality of images, comprising:

> a first feature point detection unit for receiving input of a first image, and detecting a feature point from said image;
> a second feature point detection unit for receiving input of a second image, and detecting a feature point from said image;
> a third feature point detection unit for receiving input of a third image, and detecting a feature point from said image;
> a first correlation calculating unit for receiving input of signals from said first feature point detection unit and said second feature point detection unit, and calculating the correlation between the feature point in said first image and the feature point in said second image;

a second correlation calculating unit for receiving input of signals from said second feature point detection unit and said third feature point detection unit, and calculating the correlation between the feature point in said second image and the feature point in said third image;

a robust matching unit for receiving input of signals from said first correlation calculating unit and said second correlation calculating unit, and removing combinations of said feature points that have low probability based on the condition of an image seen from a plurality of viewpoints;

a camera orientation determining unit for determining the position of said plurality of viewpoints and the direction of viewing rays;

a match propagation unit for receiving input of a list of seed matches of the points of interest from said robust matching unit and camera orientation parameter from said camera orientation determining unit, and outputting the matching of said first through third images;

a re-sampling unit for regularizing the matching from said match propagation unit, and outputting a list of trinocular matches; a three-view joint triangulation unit for receiving input of the list of trinocular matches from said re-sampling unit, and outputting a three-view joint triangulation; and

a view interpolation unit for generating an image seen from a different view based on said three-view joint triangulation.

The present invention is an image generating apparatus for generating a new image from a plurality of images, comprising:

a first feature point detection unit for receiving input of a first image, and detectinga feature point from said image;

a second feature point detection unit for receiving input of a second image, and detecting a feature point from said image;

a correlation calculating unit for receiving input of signals from said first feature point detection unit and said second feature point detection unit, and calculating the correlation between the feature point in said first image and the feature point in said second image;

a robust matching unit for receiving input of signals from said correlation calculating unit, and removing combinations of said feature points that have low probability based on the condition of an image seen from a plurality of viewpoints;

a match propagation unit for receiving input of a list of seed matches of the points of interest from said robust matching unit and outputting the matching of said first and second images;

a re-sampling unit for regularizing the matching from said match propagation unit, and outputting a list of binocular matches;

a two-view joint triangulation unit for receiving input of the list of binocular matches from said re-sampling unit, and outputting a two-view joint triangulation; and

a view interpolation unit for generating an image seen from a different view based on said two-view joint triangulation.

Furthermore, the present invention relates to a medium storing a program for realizing the apparatus described above by a computer.

The medium includes floppy disc, hard disc, magnetic tape, magneto-optic disc, CD-ROM, DVD, ROM cartridge, RAM memory cartridge with battery backup, flash memory cartridge, nonvolatile RAM cartridge, etc.

Also included are communications media such as telephone lines and other cable communications media, and microwave circuits and other wireless communications media. The Internet is included in the communications media.

A medium is defined as any kind of physical means for storing information (mainly digital data, programs), used for causing computers, dedicated processors and other processing apparatuses to perform certain functions. In other words, it may be any means for downloading programs onto a computer and for causing the computer to implement certain functions.

Brief Description of the Drawings

Fig. 1 is a flowchart showing an outline of the processing by the image generating apparatus according to an embodiment of the present invention;

Fig. 2 is a view of the schematic structure of the image generating apparatus (facial image generator) according to an embodiment of the present invention;

Fig. 3 is a view describing the movement principles of the image generating apparatus according to an embodiment of the present invention;

Fig. 4 is a view describing the movement principles of the image generating apparatus according to an embodiment of the present invention;

Fig. 5 is an exterior view of the image generating apparatus according to an embodiment of the present invention;

Fig. 6 is a view describing the movement principles of the image generating apparatus according to an embodiment of the present invention;

Fig. 7 is a vie describing the movement principles of the image generating apparatus according to an embodiment of the present invention;

Fig. 8 is a view describing the movement principles of another image generating apparatus according to an embodiment of the present invention;

Fig. 9 is a view of the schematic structure of the image generating apparatus (scenery generator) according to an embodiment of the present invention;

Fig. 10 is a schematic block view of the image generating apparatus according to an embodiment of the present invention;

Fig. 11 is a flowchart showing the procedures of determining the camera orientations of the image generating apparatus according to an embodiment of the present invention;

Fig. 12 is a flowchart showing the overall match propagation procedures of the image generating apparatus according to an embodiment of the present invention;

Fig. 13 is a schematic block view of another image generating apparatus according to an embodiment of the present invention;

Fig. 14 is a schematic block view of another image generating apparatus according to an embodiment of the present invention;

Fig. 15 is a view describing the morphing principles;

Fig. 16 is a view describing the occlusion; and

Fig. 17 is a view describing the epipolar geometry.

Description of the Preferred Embodiments

Now, the apparatus/method according to an embodiment of the present invention will be described by reference to the drawings.

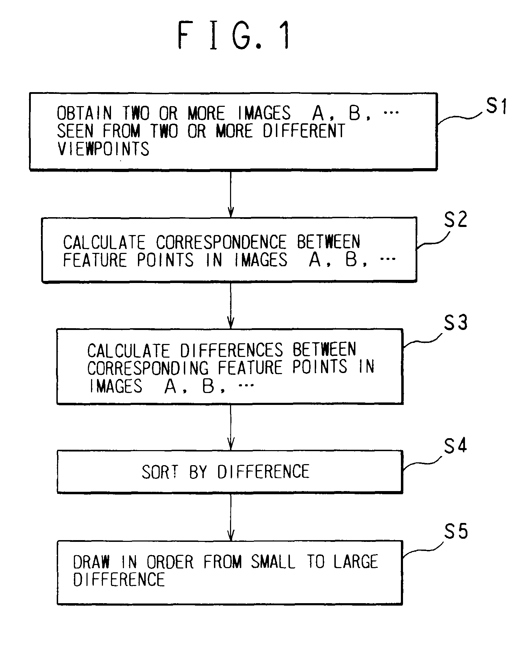

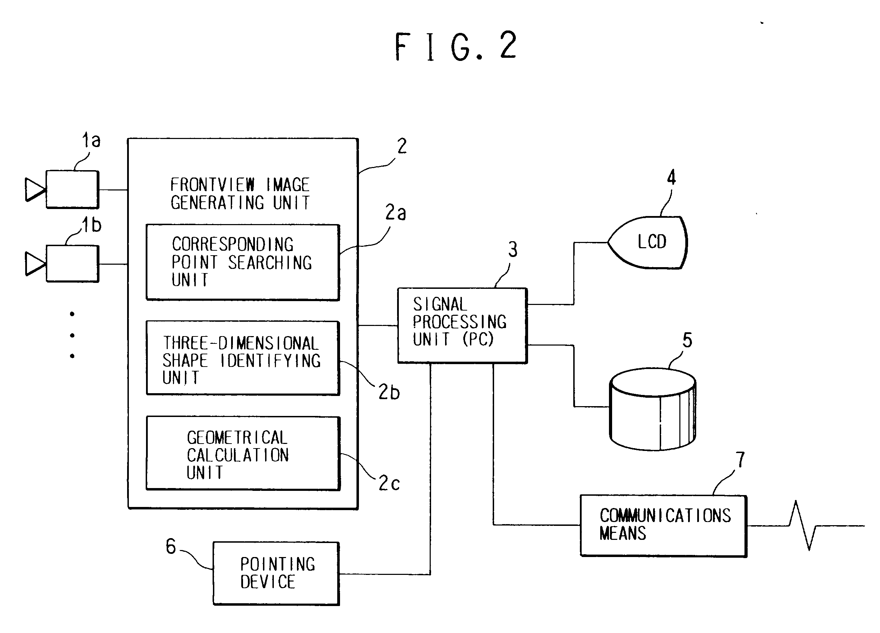

Fig. 1 is a flowchart showing an outline of the processing of the apparatus/method according to an embodiment of the present invention. Fig. 2 is a view of the schematic structure of the apparatus according to an embodiment of the present invention. The image data (signals) obtained from a plurality of cameras 1a, 1b, ... are input into a front view image generating unit 2. In front view image generating unit 2, a corresponding point searching unit 2a searches the mutually corresponding points by analyzing the plurality of images. These corresponding points are analyzed by a three-dimensional shape identifying unit 2b, and the three-dimensional shape of the object is identified. Based on the identified results, the viewing rays are set, and the data is geometrically converted or varied based on the set viewing rays, thereby generating a front view image that would be gained by looking into a mirror. Each of the above-mentioned processes will be described in further detail below. Furthermore, camera 1 need only be a plurality of cameras, regardless of whether 2, 3, 4 or more. Two or three are desirable from the practical aspect.

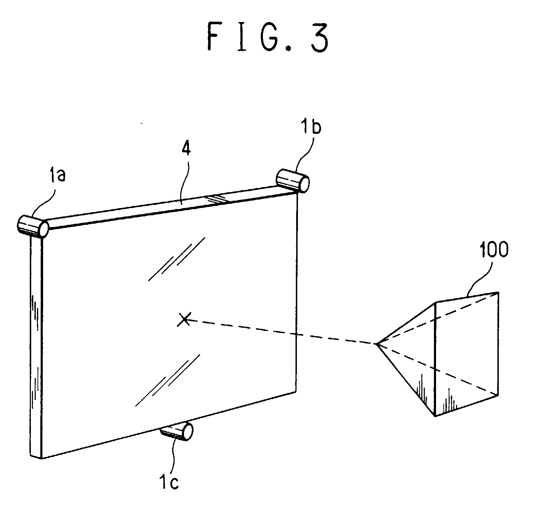

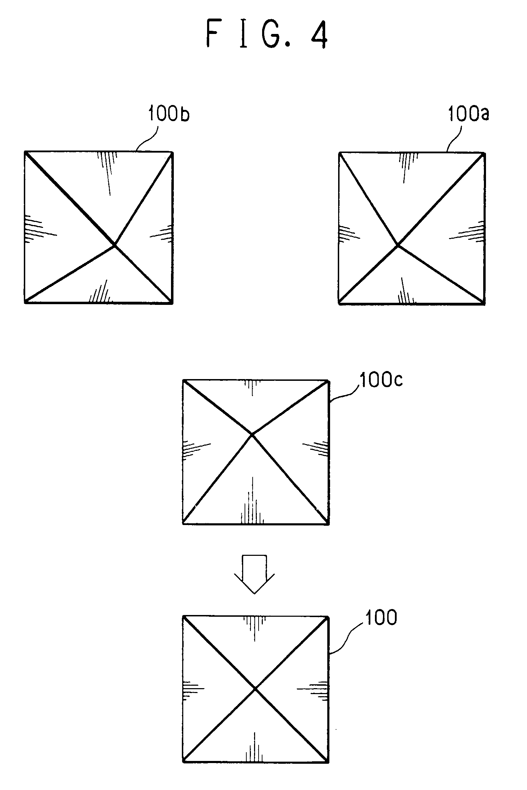

The processing of the front view image generating unit will be described in further detail based on Figs. 3 and 4. Fig. 3 is a model view of a digital mirror comprising cameras 1 at the left and right upper ends and the lower center of a plate-shaped liquid crystal display apparatus (LCD) 4. An object 100 is placed on the normal vector intersecting substantially the center of LCD 4. Normally, the face of the user is located at this position, but for convenience of explanation, a quadrangular pyramid is used as an example. When quadrangular pyramid 100 is shot by cameras 1a, 1b, and 1c, images 100a, 100b, and 100c are obtained. Image 100a is shot by camera la, and viewed from LCD 4, this image is a view of pyramid 100 from the left side. Image 100b is shot by camera 1b, and is a view of pyramid 100 from the right side. Image 100c is shot by camera 1c, and is a view of pyramid 100 from the bottom. If there are at least two images seen from different viewpoints located relatively adjacent to each other, then it is possible to identify a unique three-dimensional shape from a plurality of two-dimensional images through a geometrical calculation processing similar to the stereoscopic view processing. In order to perform this processing by a computer, it is necessary to specify the feature points. In the present example, the apexes of quadrangular pyramid 100 are selected. When the feature points have been specified for all images, the correspondence between these feature points is calculated. In this way, it is analyzed at which position in each image the same portion of pyramid 100 is located. Based on this analysis, the three-dimensional shape of pyramid 100 is identified. According to image 100a, the apex is on the left side, so it is clear that pyramid 100 is at the left of camera la. In this way, the three-dimensional shape is identified. Thereafter, the viewpoint is set for example substantially in the center of LCD 4, and based on this viewpoint, an image of pyramid 100 is generated. For example, image 100 as shown in Fig. 4 is obtained.

In Fig. 2, signal processing unit 3 receives the front view image processed as above from front view image generating unit 2, and performs various processing such as displaying the object or a reflection of the object such as gained by conventional mirror reflection, etc. Examples are the zoom and wide angle processes. A certain portion of the whole image reflected in a mirror is instantaneously enlarged or reduced. The selection of the portion to be enlarged or reduced and the processing to be performed is designated by a pointing device 6 such as a mouse. If the surface of LCD 4 is a touch panel, it is possible to touch an arbitrary portion of the image to enlarge or reduce such portion instantaneously.

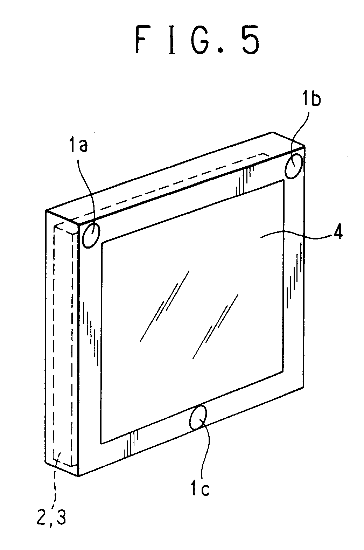

Fig. 5 is a variation of the apparatus in Fig. 2. Three CCD cameras 1a, 1b and 1c are provided around LCD 4. At the back of LCD 4, a computer is provided which functions as front view image generating unit 2 and signal processing unit 3. These are all stored in one case.

Now, the whole processing of the apparatus/method according to an embodiment of the present invention will be described in outline. According to the flowchart in Fig. 1, two or more images A, B, ... from two or more different viewpoints are obtained (S1).

Next, the correspondence between feature points in image A and image B is calculated (S2). Feature points may be edges, corners, texture, etc. One way of searching a point in one image corresponding to the feature point in another image is to use the local density pattern in the area around such point. According to this method, a window is set around the feature point of the other image, and this window is used as a template for performing matching within a predetermined search range along the epipolar line of the one image. According to another method, features such as the edges of light and shade are extracted from the image and correspondence for such features is found between the images.

The difference between corresponding feature points in image A and image B is calculated (S3). If the correspondence between these feature points in both images is calculated, the difference can be found very easily. Through this processing, the extraction of the necessary features points and the difference between them (amount of change) can be gained as required for the morphing process.

The present embodiment is also a drawing apparatus and method for performing morphing of images of three-dimensional objects. In order to draw images of three-dimensional objects, the position of the object within a space must be determined, and, according to the present drawing apparatus and method, it is possible to draw images of three-dimensional objects without directly requiring the three-dimensional position.

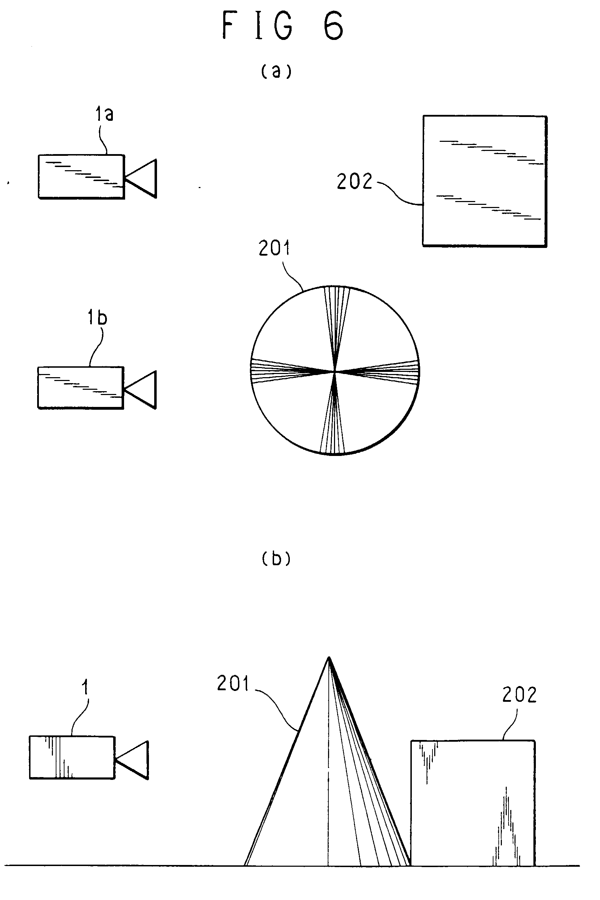

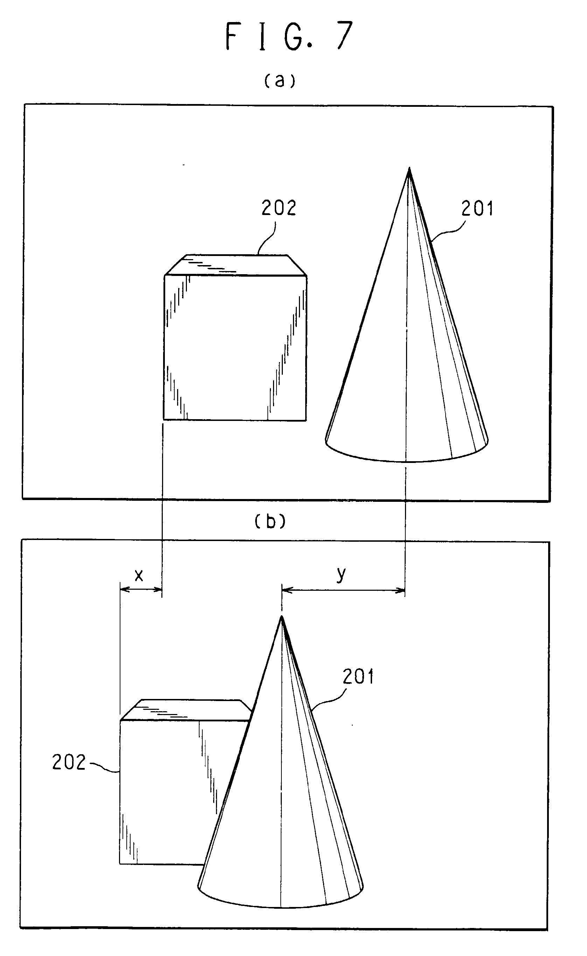

The movement principle will be described by using Figs. 6 and 7. As shown in Figs. 6(a) and (b), a cone 201 and a cube 202 are arranged within a certain space and shot by two cameras 1a and 1b. As the viewpoints of cameras 1a, 1b differ, the obtained images are also different. The images obtained by cameras 1a, 1b are as shown in Figs. 7 (a) and (b). Comparing these two images, it is clear that the positions of cone 201 and cube 202 are different. Assuming that the amount of change in the relative position of cone 201 is y, and that of cube 202 is x, then Fig. 7 shows that x<y. This is due to the distance between the object and the cameras. If the values of x and y are large, the feature points are near the camera. On the other hand, if such values are small, the feature points are far from the camera. In this way, the distances between the object and the cameras are clear from the differences between corresponding feature points in the different images. Utilizing this characteristic, the feature points are sorted according to the differences (S4), and the images are written in order from that with the smallest difference (meaning the image shot by the camera farthest to the object) to the largest difference (S5). Portions near the camera are overwritten and displayed, but portions far from the camera (hidden portions) are deleted through the overwriting. In this way, it is possible to adequately reproduce an image in three-dimensional space without using depth information.

The apparatus shown in Figs. 2 to 5 is able to display an image shown from a different viewpoint than camera 1 by processing the image obtained from camera 1 as shown in Fig. 1. For example, it is possible to use the images of a face from the right, from the left and the bottom to generate and display the image of the face seen from the front. Also, by applying morphing processing to the face seen from the right and the left, it is possible to display the face from various angles, as if the camera viewpoint had continuously moved. The apparatus in Figs. 2 to 5 can be used quasi as a digital form mirror (hereinafter the "digital mirror").

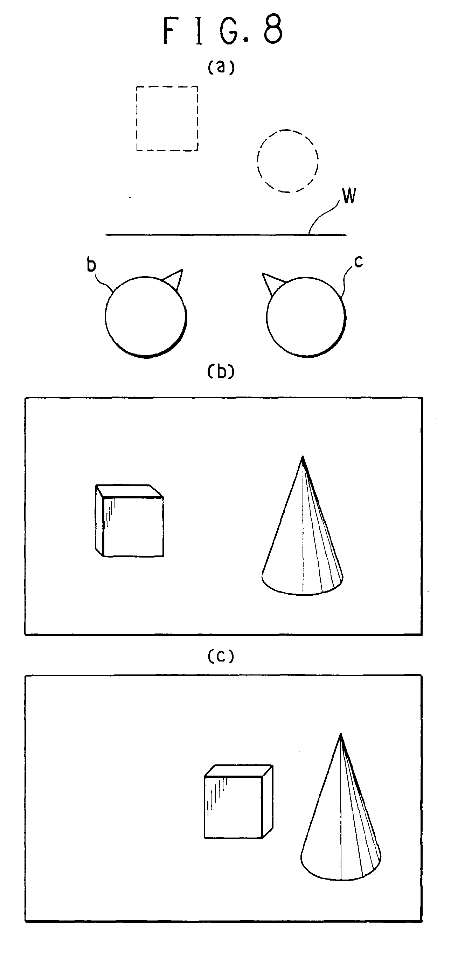

It is also possible to use the apparatus in Figs. 2 to 5 as a digital window simulating an actual window. By displaying various scenes on a liquid crystal television, the present invention provides a display apparatus for the window to be used in substitution of the actual window. Conventional display apparatuses merely displayed images, e.g. scenery, seen from a fixed viewpoint, being unable to express small changes in scenery occurring from changes in the viewpoint position at the actual window. By utilizing the apparatus or method according to the present embodiment, it is possible to recognize the position of the person, i.e. the position of the viewpoint, so by changing the display according to the viewpoint position, an even more real scenery display is possible. For example, Fig. 8 shows a liquid crystal apparatus ("digital window") W and a person standing before it. In Fig. 8(a), a cone and cube are arranged within a virtual space, and this situation is displayed on liquid crystal apparatus W. If the person is at position b, the image shown in Fig. 8(b) will be displayed on liquid crystal apparatus W, and if the person is at position c, then the image shown in Fig. 8(c) will be displayed. In this way, by displaying an adequate screen according to the viewpoint position, the user will feel as if he were turning his head at an actual window.

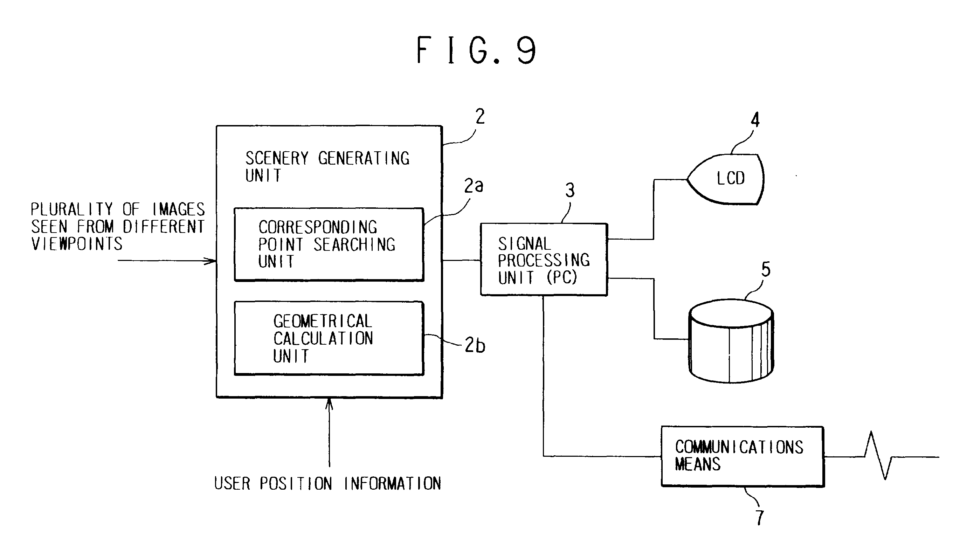

Fig. 9 is a view of the schematic structure of the image generating apparatus (scenery generator) according to an embodiment of the present invention. A plurality of image data is input from an external device to a scenery generating unit 2. These image data may be provided by a plurality of cameras, or from an image database prepared in advance. In scenery generating unit 2, corresponding point searching unit 2a searches points corresponding to each other by analyzing the plurality of images. Geometrical calculation unit 2c analyzes these corresponding points and sets the viewing ray, and thereafter performs the geometrical conversion or variation of the data based on the set viewing ray to generate the scenery image. Scenery generating unit 2 receives information on the position of the user from an external device, and generates the scenery image according to such user's position. Magnetic sensors are known as sensors informing the position of such user, but other sensors such as ultrasound or pressure sensors, and cameras, may be used, too.

Furthermore, the apparatus in Fig. 9 may also be used as for morphing processing. Two different images, e. g. facial images of two different persons A and B, are input into the apparatus in Fig. 9, and by gradually changing the viewpoint position input into the apparatus in Fig. 9 from an external device, it is possible to gradually change the screen from one of the images to the other image.

The digital mirror and digital window processing methods above are common in that they include a processing of determining the position of an object within a three-dimensional space by calculating the correspondence of feature points between a plurality of images. In the digital mirror, the position measurement precision is desirably high, as the measurement precision of the three-dimensional position directly affects the image precision. However, in the digital window, there is no large feeling of strangeness even if the viewpoint position is somewhat inaccurate. Therefore, the digital window does not require as high a measurement precision of the position as the digital mirror. A processing apparatus/method for the digital mirror will be hereinafter referred to as the facial image generator and a processing apparatus/method for the digital window the scenery image generator. Both will be now described in further detail.

Explanation of Terms

- Epipolar Geometry

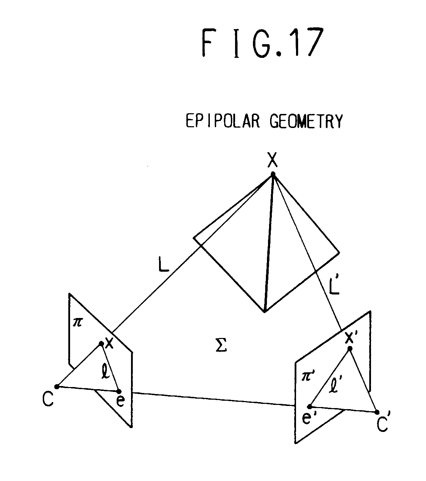

When an object in a three-dimensional space is projected by a plurality of cameras, geometry unique to the plurality of images can be found. This is called the epipolar geometry. In Fig. 17, X is a point within a three-dimensional space, C and C' are viewpoints, $\pi$ and $\pi'$ are projection planes, $\Sigma$ is the epipolar face defined by C, C' and X, straight line L is the epipolar line gained by intersecting the epipolar plane with the image face $\pi$, and points e, e' are epipoles gained by intersecting the straight line connecting viewpoints C and C' with the image faces $\pi$ and $\pi'$.

- Delaunay Triangulation

A Delaunay triangulation is a method of dividing a group of arbitrarily set points of tangency into triangles in the two-dimensional space and into tetrahedrons in the three-dimensional space. It is known that the circumscribed circle of all elements gained through this method contains no other points of tangency in its interior. In two-dimensional space, there are various ways of triangulating an aggregate of given points. Desirable is a method of dividing the points into shapes nearest equilateral triangles, without including any crushed triangles. Among the several methods satisfying this condition, a triangulation method is common that is based on the minimum angle maximum principle, according to which the minimum angle of the divided triangle group should be larger than the minimum angle of other division methods. Thereby, it is generally possible to perform unique triangulation. This method is called the Delaunay triangulation. Specifically, the circumscribed circle of the triangles gained from the two triangulation methods for four given points is prepared, and the method that fulfills the condition that the other point is not included in the interior of the circumscribed circle is selected.

Facial Image Generator

The facial image generator conducts its processing using three cameras and a trifocal tensor suited as constraint. The scenery generator conducts its processing using two cameras and the epipolar geometry as constraint. Conventionally, it was difficult to find correspondences only by comparing the three images of the three cameras, but by using the space constraints of the three cameras, the correspondence search can be performed automatically.

An example of the processing of three images with different viewpoints from three cameras will be described below.

1. Feature point detection unit

Three images with different viewpoints are input into three feature point detection units 10a to 10c. Feature point detection units 10a to 10c outputs a list of feature points also called points of interest. If the object has a geometrical shape such as triangles or squares, the apexes thereof are the features points. In normal photograph images, points of interest are naturally good candidates for feature points as points of interest are by their very definition image points that have the highest textureness.

2 Seed finding unit

Correlation units 11a and 11b and a robust matching unit 12 make a seed finding unit. This unit functions to find an aggregate of initial trinocular matches (constraint of the positions of three cameras) that are highly reliable. Three lists of points of interest are input into this unit, and the unit outputs a list of trinocular matches of the points of interest called seed matches. Correlation units 11a and 11b establish a list of tentative trinocular matches. Robust matching unit finalizes a list of reliable seed matches using robust methods applied to three view geometric constraints.

2.1 Correlation unit

The movements of correlation units 11a and 11b will be described below. These units perform the processing of three lists of points of interest in three images output from feature point detection unit 10a to 10c. The ZNCC (zero-mean normalized cross-correlation) correlation measure is used for finding correspondences. By using the ZNCC correlation measure, it is possible to find the correspondence between images even if the size of the object is somewhat different between such images or the images are somewhat deformed. Therefore, the ZNCC correlation is used for matching seeds. The ZNCCx($\Delta$) at point x = $(x,y)^T$ with the shift $\Delta = (\Delta_x, \Delta_y)^T$ is defined to be:

$$\frac{\Sigma_i(I(x+i) - \overline{I}(x))(I'(x+\Delta+i) - \overline{I}'(x+\Delta))}{(\Sigma_i(I(x+i) - \overline{I}(x))^2\Sigma_i(I'(x+\Delta+i) - \overline{I}'(x+\Delta))^2)^{1/2}}$$

where I⁻ (x) and I⁻'I(x) are the means of pixel luminances for the given window centered at x.

2.2 Robust matching unit

Next, the binocular matches from correlation unit 11 are merged into one single trinocular match by robust matching unit 12. Robust matching unit 12 receives input of a list of potential trinocular matches from correlation unit 11 and outputs a list of highly reliable seed trinocular matches. A robust statistics method based on random sampling of 4 trinocular matches in three images is used to estimate the 12 components of the three-view constraints to remove the outliers of trinocular matches. When the same object is shot by three cameras and three images from different viewpoints are gained, the same point in the object in each of the three images (e.g., position of feature point) can be uniquely defined from the position of the object, the camera position and the camera direction according to certain rules. Therefore, by determining whether the points of interest in the list of trinocular matches gained from correlation unit 11 satisfies such rules, it is possible to obtain the list of points of interest of the correct trinocular matches.

Given u = (u,v), u' = (u',v') and u" = (u",v") the normalized relative coordinated of the trinocular matches, the three-view constraints are completely determined by the following 12 components $t_1$ to $t_{12}$:

$$t_4\, u + t_8\, v + t_{11}u' + t_9\, u" = 0,$$

$$t_2\, u + t_6\, v + t_{11}v' + t_{10}u" = 0,$$

$$t_3\, u + t_7\, v + t_{12}u' + t_9\, v" = 0,$$

$$t_1\, u + t_5\, v + t_{12}v' + t_{10}v" = 0.$$

3 Unit of auto-determination of camera orientations

Now, a camera orientation auto-determination unit 13 will be described below. The classical off-line calibration of the whole system is hardly applicable here even though 3 cameras may be a priori fixed, but their orientations could be still variable. Therefore, camera orientation auto-determination unit 13 determines the camera orientation in order to constrain the match propagation. In other words, camera orientation auto-determination unit 13 receives input of a list of seed matches from robust matching unit 12 and outputs the orientation of the camera system.

Now, the basic ideas of camera orientation auto-determination unit 13 will be described below. At first, the three-view constraints $t_1,..., t_{12}$ are optimally re-computed by using all trinocular inlier matches. The extraction of camera orientations directly from the three-view constraints for later usage is based on an original observation that the problem of affine cameras is converted into a nice problem of 1D projective cameras.

For those skilled in the art, it is evident that an elegant 1D projective camera model first introduced in L. Quan and T. Kanade "Affine structure from line correspondences with uncalibrated affine cameras" IEEE Transactions on Pattern Analysis and Machine Intelligence, 19(8): 834-845, August 1997 occurs on the plane at infinity for the usual affine cameras. All directional quantities are embedded on the plane at infinity, therefore encoded by the 1D projective camera. The 1D camera is entirely governed by its trifocal tensor $T_{ijk}$ (providing a strong constraint) such that $T_{ijk}u^iu'^ju''^k = 0$.

From the above aspects, the procedure of determining the camera orientations according to the present embodiment is as follows.

S11: Convert 2D affine cameras into 1D projective cameras Using tensor-vector mapping defined by 4(a - 1) + 2(b - 1) + c 1 between the tensor components and the three-view constraint components converts the triplet of affine cameras represented by ti into the triplet of 1D cameras represented by $T_{abc}$.

S12: Extraction of epipoles

The 1D camera epipoles can be extracted from the tensor by solving, for instance, $|T_{\cdot jk}e_2| = 0$ for the epipoles $e_2$ and $e_3$ in the first image. The other epipoles can be similarly obtained by factorizing the matrix $T_{i\cdot k}e'_1$ for $e'_1$ and $e'_3$ and $T_{\cdot jk}e''_1$ for $e''_1$ and $e''_2$.

S13: Determination of camera matrices M' = (H, h) and M'' = (H', h') and the camera centers c, c' and c''

It is first straightforward that $h = e'_1$ and $h' = e''_1$. The homographic parts of the camera matrices are determined from $T_{ijk} = H_i^jh^k - h'^jH'_i^k$. Then, the camera centers and the 2D projective reconstruction can be determined from the camera matrices as their kernels.

S14: Update of the projective structure

The known aspect ratio for the affine camera is equivalent to the knowledge of the circular points on the affine image plane. The dual of the absolute conic on the plane at infinity could be determined by observing that the viewing rays of the circular points of each affine image plane are tangent to the absolute conic through the camera center.

S15: Determination of camera orientation parameters Transforming the absolute conic to its canonical position therefore converts all projective quantities into their true Euclidean counterparts. Euclidean camera centers give the orientation of the affine cameras and the affine epipolar geometry is deduced from the epipoles.

4. Constraint match propagation unit

Now, a constraint match propagation unit 14 for expecting a maximum number of matches in three images will be described below. This unit 14 receives input of a list of seed matches and camera orientation parameters from camera orientation auto-determination unit 13 and outputs dense matching in three images.

After obtaining the initial seed matches, it comes the central idea of match propagation from the initial seed matches. The idea is similar to the classic region growing method for image segmentation based on the pixel homogeneity. The present embodiment adopts region growing to match growing. Instead of using the homogeneity property, a similarity measure based on the correlation score is used. This propagation strategy could also be justified as the seed matches are the points of interest that are the local maxima of the textureness, so the matches could be extended to its neighbors which have still strong textureness though not a local maxima.

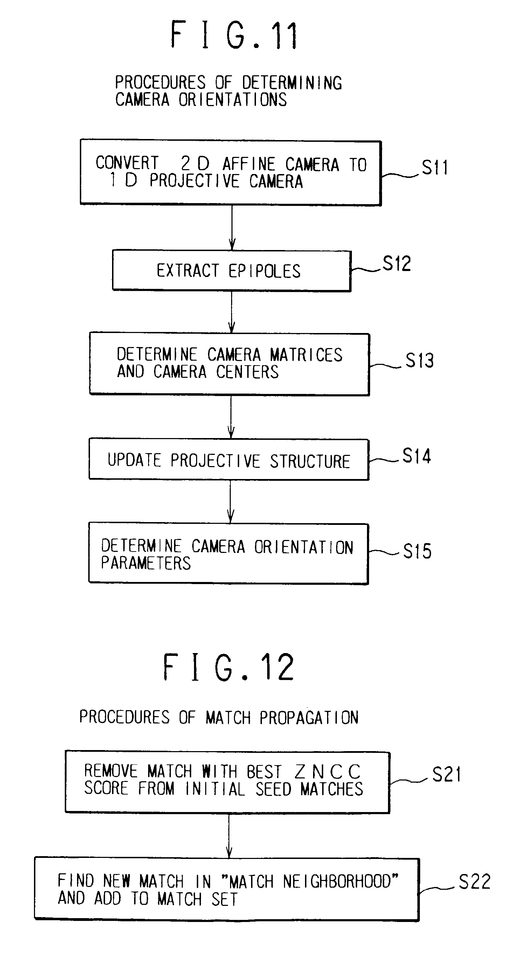

All initial seed matches are starting points of concurrent propagations. At each step, a match (a, A) with the best ZNCC score is removed from the current set of seed matches (S21 in Fig. 12). Then new matches are searched in its 'match neighborhood' and all new matches are simultaneously added to the current set of seeds and to the set of accepted matches-under construction (S22). The neighbors pixels a and A are taken to be all pixels within the 5 x 5 window centered at a and A to ensure the continuity constraint of the matching results. For each neighboring pixel in the first image, we construct a list of tentative match candidates consisting of all pixels of a 3 x 3 window in the neighborhood of its corresponding location in the second image. Thus the displacement gradient limit should not exceed 1 pixel. This propagation procedure is carried out simultaneously from the first to the second and the first to the third image, and the propagation is constrained by the camera orientation between each pair of images. Only those that satisfy the geometric constraints of the camera system are propagated. Further, these two concurrent propagations are constrained by the three-view geometry of the camera system. Only those that satisfy the three-view geometry of the camera system are retained.

The unicity constraint of the matching and the termination of the process are guaranteed by choosing only new matches not yet accepted. Since the search space is reduced for each pixel, small 5 x 5 windows are used for ZNCC, therefore minor geometric changes are allowed.

It can be noticed that the risk of bad propagation is greatly diminished by the best first strategy over all matched seed points. Although seed selection step seems very similar to many existing methods for matching points of interest using correlation, the crucial difference is that propagation needs only to take the most reliable ones rather than taking a maximum of them. This makes our algorithm much less vulnerable to the presence of bad seeds in the initial matches. In some extreme cases, only one good match of points of interest is sufficient to provoke an avalanche of the whole textured images.

5. Re-sampling unit

Now, a re-sampling unit 15 will be described below. The dense matching may still be corrupted and irregular, re-sampling unit 15 will regularize the matching map and also provide a more efficient representation of images for further processing. Re-sampling unit 15 receives input of the dense matching in three images from constraint match propagation unit 14 and outputs a list of re-sampled trinocular matches.

The first image is initially subdivided into square patches by a regular grid of two different scales 8 x 8 and 16 x 16. For each square patch, we obtain all matched points of the square from the dense matching. A plane homography H is tentatively fitted to these matched points $u_i \leftrightarrow u'_i$ of the square to look for potential planar patches. A homography in $P^2$ is a projective transformation between projective planes, it is represented by a homogeneous 3 x 3 non singular matrix such that $\lambda_i u'_i = H u_i$, where u and u' are represented in homogeneous coordinates. Because a textured patch is rarely a perfect planar facet except for manufactured objects, the putative homography for a patch cannot be estimated by standard least squares estimators. Robust methods have to be adopted, which provide a reliable estimate of the homography even if some of the matched points of the square patch are not actually lying on the common plane on which the majority lies. If the consensus for the homography reaches 75%, the square patch is considered as planar. The delimitation of the corresponding planar patch in the second and the third image is defined by mapping the four corners of the square patch in the first image with the estimated homography H. Thus, a corresponding planar patches in three images is obtained.

This process of fitting the square patch to a homography is first repeated for all square patches of the first image from the larger to the smaller scale, it turns out all matched planar patches at the end.

6 Three-view joint triangulation unit

Now, a three-view joint triangulation unit 16 will be described below. The image interpolation relies exclusively on image content without any depth information and is sensitive to visibility changes and occlusions. The three view joint triangulation is designed essentially for handling the visibility issue. Three-view joint triangulation unit 16 receives input of the re-sampled trinocular matches and outputs joint three-view triangulation. The triangulation in each image will be Delaunay because of its minimal roughness properties. The Delaunay triangulation will be necessarily constrained as we want to separate the matched regions from the unmatched ones. The boundaries of the connected components of the matched planar patches of the image must appear in all images, and therefore are the constraints for each Delaunay triangulation.

The joint three-view triangulation is defined as fulfilling the following conditions.

- There is one-to-one vertex correspondence in three images.
- The constraint edges are the boundary edge of the connected components of the matched regions in three images.
- There is one-to-one constraint edge correspondence in three images.
- In each image, the triangulation is a constraint Delaunay triangulation by the constraint edges.

A natural choice to implement this joint three-view triangulation is a greedy-type algorithm.

7 View interpolation unit

Now, a view interpolation unit 17 will be described below. According to view interpolation unit 17, any number of in-between new images can be generated, for example, images seen from positions between a first and a second camera. These in-between images can be generated from the original three images. View interpolation unit 17 receives input of the three-view joint triangulation results and outputs any in-between image $I(\alpha, \beta, \gamma)$ parameterized by $\alpha$, $\beta$, and $\gamma$ such that $\alpha+\beta+\gamma = 1$.

The view interpolation processing is performed according to the following procedures.

1. The position of the resulting triangle is first interpolated from three images.

2. Each individual triangle is warped into the new position and a distortion weight is also assigned to the warped triangle.

3. Each whole image is warped from its triangulation. In the absence of depth information, a warping order for each triangle is deduced from its maximum disparity to expect that any pixels that map to the same location in the generated image are arriving in back to front order as in the Paiter's method. All unmatched triangles are assigned the smallest disparity so that they are always warped before any matched triangles.

4. The final pixel color is obtained by bleeding three weighted warped images.

Furthermore, the similar idea developed for facial image generation from 3 images could be extended to either 2 or N images with reasonable modification of the processing units. Other objects than face images could also be processed in a very similar manner.

Scenery Image Generator

As described above, the scenery image generator does not require a very high measurement precision. Therefore, it is possible to process two or more images. Now, a two-view unit performing processing based on two views and a three-view unit performing processing based on three views will be described below.

A. Two-View Unit

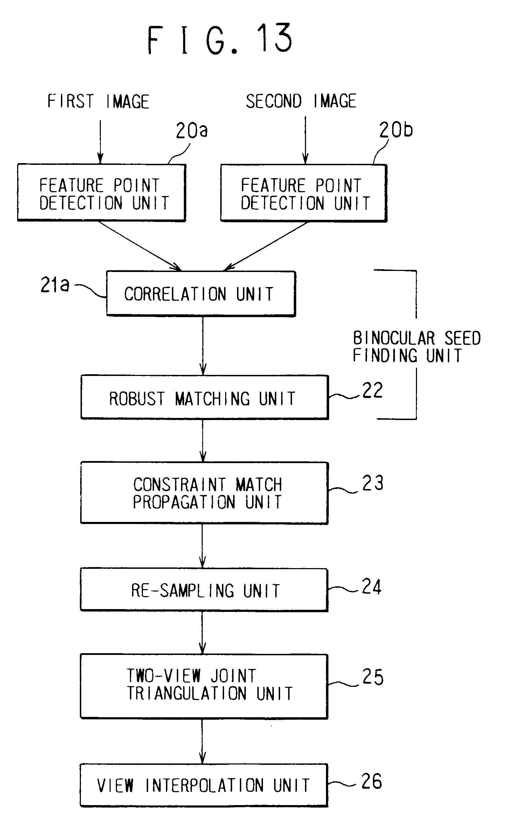

Figure 13 sketches out the system architecture for the two-view unit.

1 Feature point detection unit

Feature point detection units 20a, 20b each receive input of images and respectively output lists of feature points. These units are independently applied to each individual image.

2 Binocular seed finding unit

A binocular seed finding unit finds a set of reliable initial matches. The binocular seed finding unit receives input of the two lists of points of interest and outputs a list of binocular matches called seed matches. This unit is composed of two parts. The first is a correlation unit 21, which establishes a list of tentative binocular matches. The second is a robust, matching unit 22, which finalizes a list of reliable seed matches using robust methods applied to two view geometric constraint encoded by the fundamental matrix.

3 Constraint match propagation unit

Constraint match propagation unit 23 expects a maximum number of matches in two images. Constraint match propagation unit 23 receives input of the list of seed matches and outputs dense matching in three images.

This process will be described with reference to M. Lhuillier and L.Quan "Image interpolation by joint view triangulation" in Proceedings of the Conference On Computer Vision and Pattern Recognition, Fort Collins, Colorado, USA, 1999. Let M be the list of the current matched points, and B be the list of current seeds. Obviously, list B is initialized to S and list M to an empty list. At each step, the best match $m \leftrightarrow m'$ is pulled from the set of seed matches B. Then additional matches are looked for in the neighborhood of m and m'. The neighbors of m are taken to be all pixels within the 5 x 5 window centered at m. For each neighboring pixel of the first image, it is first constructed in the second image a list of tentative match candidates that consists of all pixels of a 3 x 3 window in the neighborhood of its corresponding location in the second image. The matching criterion c(x, x') is still the correlation defined above but within a 5 x 5 window. Finally additional matches in the neighborhood of m and m' are added simultaneously in match list M and seed match list B such that the unicity constraint is preserved. The algorithm terminates when the seed match list B becomes empty.

This algorithm could be efficiently implemented with a heap data structure for the seed pixels B of the regions of the matched points.

4. Re-sampling unit

The dense matching may still be corrupted and irregular. A re-sampling unit 24 will regularize the matching map and also provide a more efficient representation of images for further processing. Re-sampling unit 24 receives input of dense matching in three images and outputs a list of re-sampled binocular matches. The processing of this unit will be described below with reference to the reference literature stated above. The brut quasi-dense matching result may still be corrupted and irregular. Although there is no rigidity constraint on the scenes, it is assumed that the scene surface is at least piecewise smooth. Therefore, instead of using global geometric constraints encoded by fundamental matrix or trifocal tensor, local geometric constraints encoded by planar homography could be used. The quasi-dense matching is thus regularized by locally fitting planar patches. The construction of the matched planar patches is described as follows.

The first image is initially subdivided into square patches by a regular grid of two different scales 8x8 and 16x 16.

For each square patch, all matched points of the square are obtained from the quasi-dense matching map. A plane homography H is tentatively fitted to these matched points $u_i \leftrightarrow u'_i$ of the square to look for potential planar patches. A homography in $P^2$ is a projective transformation between projective planes, and it is represented by a homogeneous 3 x 3 non-singular matrix such that $\lambda_i u'_i = Hu_i$, where u and u' are represented in homogeneous coordinates. Each pair of matched points provides 2 homogeneous linear equations in the matrix entries $h_{ij}$. The 9 entries of the homography matrix counts only for 8 d.o.f. up to a scale, therefore 4 matched points, no three of them collinear, are sufficient to estimate the H. Because a textured patch is rarely a perfect planar facet except for manufactured objects, the putative homography for a patch can not be estimated by standard least squares estimators. Robust methods have to be adopted, which provide a reliable estimate of the homography even if some of the matched points of the square patch are not actually lying on the common plane on which the majority lies. The Random Sample Consensus (RA_VSAC) method originally introduced by Fischler and Bolles is used for robust estimation of the homography.

If the consensus for the homography reaches 75%, the square patch is considered as planar. The delimitation of the corresponding planar patch in the second image is defined by mapping the four corners of the square patch in the first image with the estimated homography H. Thus, a pair of corresponding planar patches in two images is obtained.

This process of fitting the square patch to a homography is first repeated for all square patches of the fast image from the larger to the smaller scale, it turns out all matched planar patches at the end. It should be noticed that the planar patches so constructed may overlap in the second image. To reduce the number of the overlapped planar patches, but not solve the problem, the corners of the adjacent planar patches are forced to coincide in a common one if they are close enough. Each planar patch could be subdivided along one of its diagonals into 2 triangles for further processing. From now on, the meaning of a matched patch is more exactly a matched planar patch, as only the matched patch that succeeds in fitting a homography will be considered.

5. Two view joint triangulation unit

The image interpolation relies exclusively on image content without any depth information, and it is sensitive to visibility changes and occlusions. The three view joint triangulation is designed essentially for handling the visibility issue. A two-view joint triangulation unit 25 receives input of the re-sampled binocular matches, and outputs joint two-view triangulation results. As image interpolation relies exclusively on image content with no depth information, it is sensitive to changes in visibility. In this section, a multiple view representation is proposed to handle the visibility issue that is herein called joint view triangulation, which triangulates simultaneously and consistently (the consistency will soon be precised) two images without any 3D input data. Triangulation has proven to be a powerful tool of efficiently representing and restructuring individual image or range data.

The triangulation in each image will be Delaunay because of its minimal roughness properties. The Delaunay triangulation will be necessarily constrained as it is desired to separate the matched regions from the unmatched ones. The boundaries of the connected components of the matched planar patches of the image must appear in both images, therefore are the constraints for each Delaunay triangulation. By consistency for the joint triangulation, it is meant that there is a one-to-one correspondence between the image vertices and a one-o-one correspondence between the constrained edges - boundaries of the matched regions.

In summary, the joint view triangulation for two views has the following properties: 1. one-to-one vertex correspondence in two images; 2. one-to-one constraint edge correspondence in two images, the constraint edges are the boundary edge of the connected components of the matched regions in two images; and 3.the triangulation in each image is a constrained Delaunay by the constraint edges.

A greedy method for joint view triangulation is a natural choice. The algorithm can be briefly described as follows.

- The joint view triangulation starts from two triangles in each image.
- Then, each matched planar triangle is incrementally inserted into each triangulation. The insertion is carried out in order, row by row from the top to the bottom of the grid. For each row, a two-pass algorithm is used for implementation ease and robustness.

  - The first pass consists of examining all planar patches from left to right. If the triangle in the second image does not intersect any current matched areas, its vertices are inserted into image plane for constrained triangulation. Next, the polygonal boundary of each matched area is recomputed if the newly added triangle is connected to one of the matched areas. A triangle is connected to a matched area delineated by a polygon if it shares a common edge with the boundary polygon.
  - A second pass for the current row is necessary to fill in undesirable unmatched holes that may be created during the fast pass due to the topological imitation of the data structure mentioned above.

- Completion step
  Up to this point, a consistent joint view triangulation is obtained. The structure is improved by further checking if each unmatched triangle could be fitted to an affine transformation. If an unmatched triangle succeeds in fitting an affine transformation, it is changed from an unmatched one into a matched one in the joint view triangulation.

6. View interpolation unit

Any number of in-between new images could be generated from the original three images. A view interpolation unit 26 receives input of the two-view joint triangulation results and outputs any in-between image I(aλ) parameterized by λ.

Now, it is described how to generate all in-between images by interpolating the two original images. Any in-between image I(λ) is parameterized by λ∈[0, 1] and obtained by shape interpolation and texture bleeding of the two original images such that the two original images are the endpoints of the interpolation path, I(0) = I and I(1) = I'.

A three-step algorithm is given as follows.

- Warp individual triangle
  The position is first interpolated for each vertex of the triangles u ↔ u' as

$$u''(λ) = (1 - λ)u + λu'$$

and a weight w is assigned to each warped triangle to measure the deformation of the warped triangle. The weight w is proportional to the ratio γ of the triangle surface in the first image w.r.t. the second image bounded by 1, that is ω = min(1, γ) for the triangles of the first image and ω' = min(1, 1/ γ) for the triangles of the second image.

- Warp the whole image
  To correctly handle the occlusion problem of patches, we could use either Z-buffer algorithm or the Painter's method in which pixels are sorted in back to front order when the depth information was available. In the absence of any depth information, a warping order for each patch is deduced from its maximum disparity to expect that any pixels that map to the same location in the generated image are arriving in back to front order as in the Painter's method. All triangular patches of the original images I and I' are warped onto I˜ and I˜' by first warping unmatched ones followed by matched one. The triangles whose vertices are image corners are not considered. At first, all unmatched triangles are warped onto I˜ and I˜' as they include either holes caused by occlusion in the original images. More precisely, small unmatched triangles connecting matched and unmatched regions are warped before the others unmatched triangles, since they are most probably from different objects.
  Secondly, matched triangles are warped by a heuristic order that is the decreasing order of the maximum displacement of the triangle.

- Color interpolation
  The final pixel color is obtained by bleeding two weighted warped images I˜ and I˜':

$$I''(\mathbf{u}) = \frac{(1 - λ)w(\mathbf{u})\tilde{I}(\mathbf{u}) + λw'(\mathbf{u})\tilde{I}'(\mathbf{u})}{(1 - λ)w(\mathbf{u}) + λw'(\mathbf{u})}.$$

B. Three-view unit

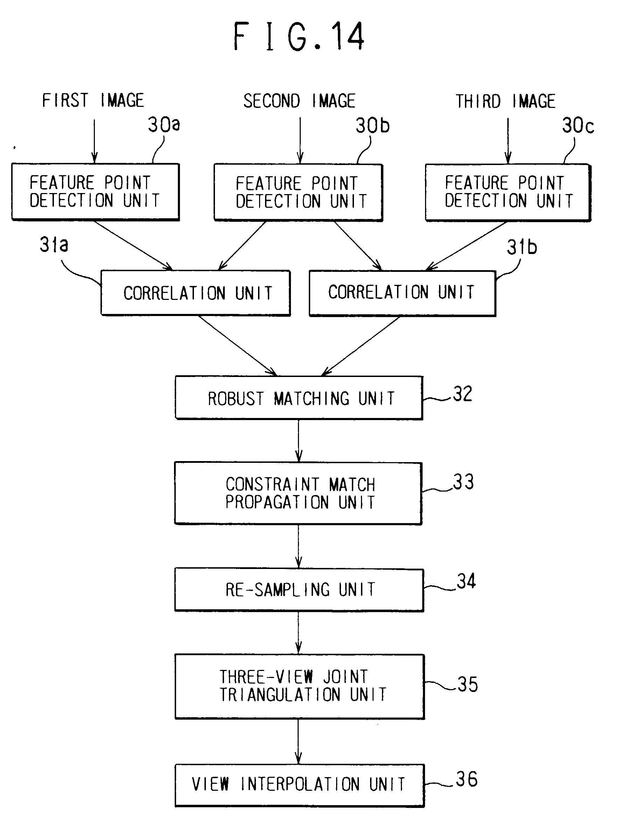

A three-view unit will be described with reference to Fig. 14.

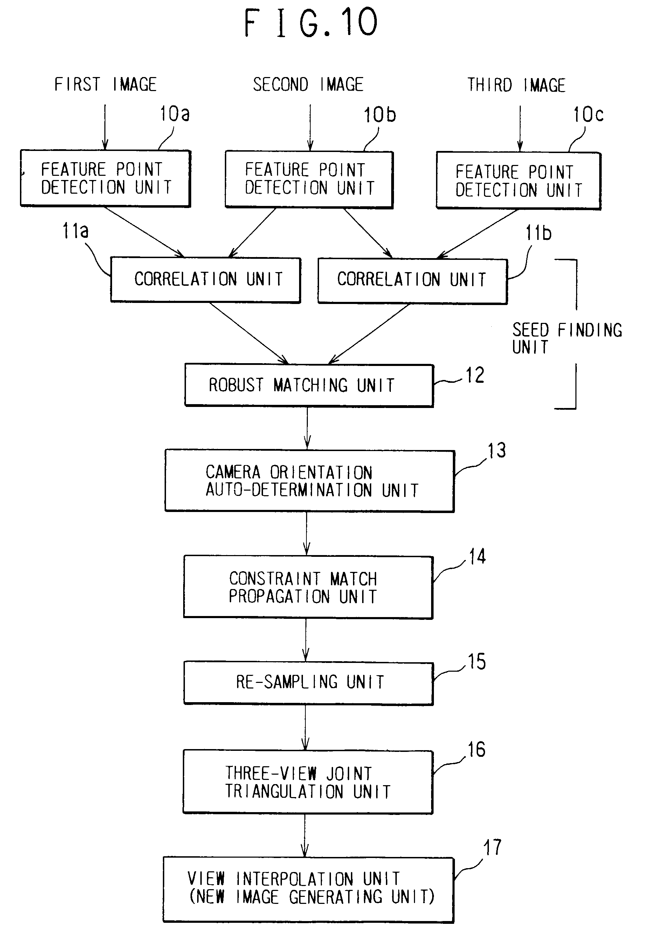

The apparatus in Fig. 14 is similar to that in Fig. 10, but differs in that it does not comprise camera orientations auto-determination unit 13. The descriptions of feature point detection unit 30, correlation unit 31, constraint match propagation unit 33, re-sampling unit 34, three-view joint triangulation unit 35 and view interpolation unit 36 will be omitted as they are the same as described above.

Robust matching unit 32 receives input of a list of potential trinocular matches and outputs a list of reliable seed trinocular matches. A robust statistics method based on random sampling of 7 or 8 trinocular matches in three images is used to estimate the whole components of the three-view matching constraints (encoded by fundamental matrices and trifocal tensor) to remove the outliers of trinocular matches.

As described above, it is possible to gain the correspondence of feature points common to a plurality of images showing a common object. It is also possible to gain the three-dimensional shape of such object based on such correspondence. Particularly, when three cameras are used, processing under the constraints of camera positions and directions is possible with high precision. By utilizing this processing, the morphing process can be performed automatically, and images of objects seen from a predetermined view can be easily generated. The apparatus/method according to the embodiments of the present invention are widely applicable to so-called computer vision.

As used herein, means is not limited to physical means but includes cases where the functions of such means are realized through software. Furthermore, the functions of one means may be realized through two or more physical means, and the functions of two or more means may be realized through one physical means.

**Claims**

1. An image generating apparatus for generating a new image from a plurality of images, comprising:

   a first feature point detection unit for receiving input of a first image, and detecting a feature point from said image;
   a second feature point detection unit for receiving input of a second image, and detecting a feature point from said image;
   a third feature point detection unit for receiving input of a third image, and detecting a feature point from said image;
   a first correlation calculating unit for receiving input of signals from said first feature point detection unit and said second feature point detection unit, and calculating the correlation between the feature point in said first image and the feature point in said second image;
   a second correlation calculating unit for receiving input of signals from said second feature point detection unit and said third feature point detection unit, and calculating the correlation between the feature point in said second image and the feature point in said third image;
   a robust matching unit for receiving input of signals from said first correlation calculating unit and said second correlation calculating unit, and removing combinations of said feature points that have low probability based on the condition of an image seen from a plurality of viewpoints;
   a camera orientation determining unit for determining the position of said plurality of viewpoints and the direction of viewing rays;
   a match propagation unit for receiving input of a list of seed matches of the points of interest from said robust matching unit and camera orientation parameter from said camera orientation determining unit, and outputting the matching of said first through third images;
   a re-sampling unit for regularizing the matching from said match propagation unit, and outputting a list of trinocular matches;
   a three-view joint triangulation unit for receiving input of the list of trinocular matches from said re-sampling unit, and outputting a three-view joint triangulation; and
   a view interpolation unit for generating an image seen from a different view based on said three-view joint triangulation;

   wherein said first through third images are each images taken from different viewpoints.

2. An image generating apparatus according to claim 1, characterized in that said correlation calculating unit calculates averages $\bar{I}(x)$ and $\bar{I}'(x)$ of the pixel luminances for a predetermined range centered at point p for each of the two images to be compared, deducts the corresponding values of said luminance averages $\bar{I}(x)$ and $\bar{I}'(x)$ from

pixel luminances I(x) and I'(x) of said two images, and calculates the correspondence based on the zero-mean normalized cross-correlation obtained from the cross-correlation of the gained values.

3. An image generating apparatus according to claim 1, characterized in that, when receiving input of at least three images of the same object shot from different views by a plurality of cameras, said robust matching unit implements statistic processing based on the three-view constraint that the position of the same point of said object in each of said images is fixed uniquely by the position of said object, the position of said cameras and the orientation of said cameras.

4. An image generating apparatus according to claim 1, characterized in that said camera orientation determining unit converts a two-dimensional affine camera into a one-dimensional projective camera, extracts the epipoles of the one-dimensional projective camera, determines the camera matrices and the camera centers, updates the projective structure, and determines the camera orientation parameters, thereby determining the camera orientation.

5. An image generating apparatus according to claim 1, characterized in that said match propagation unit removes the match with the best zero-mean normalized cross-correlation from among the initial seed matches, looks for new matches in the neighborhood of said removed match, and simultaneously adds all new matches to the current set of seeds and the set of accepted matches under construction.

6. An image generating apparatus according to claim 1, characterized in that said re-sampling unit subdivides said first image into a plurality of square patches of different scales, obtains all matched points of said square for each square patch based on dense matching from said match propagation unit, and looks for potential planar patches by fitting a plane homography to said matched points of said square, wherein the delimitation of the corresponding patch in said second image and said third image is defined by mapping the four corners of the square patch in said first image with the estimated homography.

7. An image generating apparatus according to claim 1, characterized in that said three-view joint triangulation unit performs Delaunay triangulation subject to the constraints that the boundary edge of connected components of the matched patches must appear in all images.

8. An image generating apparatus according to claim 1, characterized in that said three-view joint triangulation unit performs triangulation subject to the conditions that (1) there is one-to-one vertex correspondence in said three images; (2) the constraint edges are the boundary edge of the connected components of the matched regions in said three images; (3) there is one-to-one constraint edge correspondence in said three images; and (4) in each image, the triangulation is a constraint Delaunay triangulation by the constraint edges.

9. An image generating apparatus according to claim 1, characterized in that said view interpolation unit:

   interpolates the position of a triangle resulting from said three images;
   warps each individual triangle into a new position and assigns a distortion weight to the warped triangle;
   assigns a disparity corresponding to the matching degree to said triangle and warps each image in order from the largest to the smallest disparity; and
   bleeding said plurality of weighted warped images to generate a pixel color.

10. An image generating apparatus for generating a new image from a plurality of images, comprising:

   a first feature point detection unit for receiving input of a first image, and detecting a feature point from said image;
   a second feature point detection unit for receiving input of a second image, and detecting a feature point from said image;
   a correlation calculating unit for receiving input of signals from said first feature point detection unit and said second feature point detection unit, and calculating the correlation between the feature point in said first image and the feature point in said second image;
   a robust matching unit for receiving input of signals from said correlation calculating unit, and removing combinations of said feature points that have low probability based on the condition of an image seen from a plurality of viewpoints;
   a match propagation unit for receiving input of a list of seed matches of the points of interest from said robust matching unit and outputting the matching of said first and second images;

a re-sampling unit for regularizing the matching from said match propagation unit, and outputting a list of binocular matches;

a two-view joint triangulation unit for receiving input of the list of binocular matches from said re-sampling unit, and outputting a two-view joint triangulation; and

a view interpolation unit for generating an image seen from a different view based on said two-view joint triangulation;

   wherein said first and second images are each images taken from different viewpoints.

**11.** An image generating apparatus according to claim 10, characterized in that said match propagation unit removes the match with the best zero-mean normalized cross-correlation from among the initial seed matches, looks for new matches in the neighborhood of said removed match, and simultaneously adds all new matches to the current set of seeds and the set of accepted matches under construction.

**12.** An image generating apparatus according to claim 10, characterized in that, assuming that the surface of a scene is at least piecewise smooth, said re-sampling unit uses local geometric constraints encoded by planar homography to regularize the matching.

**13.** An image generating apparatus according to claim 10, characterized in that said re-sampling unit subdivides said first image into a plurality of square patches of different scales, obtains all matched points of said square for each square patch based on dense matching from said match propagation unit, looks for potential planar patches by fitting a plane homography to said matched points of said square, and a robust method including the Random Sample Consensus (RANSAC) method is used to estimate the putative homography for said patch, wherein the delimitation of the corresponding patch in said second image and said third image is defined by mapping the four corners of the square patch in said first image with the estimated homography.

**14.** An image generating apparatus according to claim 10, characterized in that said two-view joint triangulation unit performs Delaunay triangulation subject to the constraints that the boundary edge of connected components of the matched patches must appear in all images

**15.** An image generating apparatus according to claim 10, characterized in that said two-view joint triangulation unit performs triangulation subject to the conditions that (1) there is one-to-one vertex correspondence in said three images; (2) there is one-to-one constraint edge correspondence in said two images; the constraint edges are the boundary edge of the connected components of the matched regions in said two images; and (3) in each image, the triangulation is a constraint Delaunay triangulation by the constraint edges.

**16.** An image generating apparatus according to claim 10, characterized in that said view interpolation unit:

   interpolates the position of a triangle resulting from said three images;

   warps each individual triangle into a new positions and assigns a distortion weight to the warped triangle;

   assigns a disparity corresponding to the matching degree to said triangle and warps each image in order from the largest to the smallest disparity; and

   bleeding said plurality of weighted warped images to generate a pixel color.

**17.** An image generating apparatus for generating a new image from a plurality of images, comprising:

   a first feature point detection unit for receiving input of a first image, and detecting a feature point from said image;

   a second feature point detection unit for receiving input of a second image, and detecting a feature point from said image;

   a third feature point detection unit for receiving input of a third image, and detecting a feature point from said image;

   a first correlation calculating unit for receiving input of signals from said first feature point detection unit and said second feature point detection unit, and calculating the correlation between the feature point in said first image and the feature point in said second image;

   a second correlation calculating unit for receiving input of signals from said second feature point detection unit and said third feature point detection unit, and calculating the correlation between the feature point in said second image and the feature point in said third image;

a robust matching unit for receiving input of signals from said first correlation calculating unit and said second correlation calculating unit, and removing combinations of said feature points that have low probability based on the condition of an image seen from a plurality of viewpoints;

a match propagation unit for receiving input of a list of seed matches of the points of interest from said robust matching unit, and outputting the matching of said first through third images;

a re-sampling unit for regularizing the matching from said match propagation unit, and outputting a list of trinocular matches;

a three-view joint triangulation unit for receiving input of the list of trinocular matches from said re-sampling unit, and outputting a three-view joint triangulation; and

a view interpolation unit for generating an image seen from a different view based on said three-view joint triangulation;

wherein said first through third images are each images taken from different viewpoints.

18. A facial image generator comprising a plurality of imaging devices for obtaining images of an object seen from different viewpoints, a facial image generating unit for generating a two-dimensional image viewing said object from a certain viewpoint based on a plurality of images obtained by said plurality of imaging devices, a signal processing unit for receiving the output from said facial image generating unit and performing predetermined signal processing for such output, and a display apparatus for displaying an image based on the output from said signal processing unit,

wherein said facial image generating unit comprises:

a feature point detection unit for receiving input of a plurality of images from said plurality of imaging devices, and detecting feature points from said images;

a correlation calculating unit for receiving input of signals from said feature point detection unit, and calculating the correlation between the feature points in said plurality of images;

a robust matching unit for receiving input of signals from said correlation calculating unit, and removing combinations of said feature points that have low probability based on the condition of an image seen from a plurality of viewpoints;

a camera orientation determining unit for determining the position of said plurality of viewpoints and the direction of viewing rays;

a match propagation unit for receiving input of a list of seed matches of the points of interest from said robust matching unit and camera orientation parameter from said camera orientation determining unit, and outputting the matching of said plurality of images;

a re-sampling unit for regularizing the matching from said match propagation unit, and outputting a list of binocular matches;

a three-view joint triangulation unit for receiving input of the list of binocular matches from said re-sampling unit, and outputting a three-view joint triangulation; and

a view interpolation unit for generating an image seen from a different view based on said two-view joint triangulation;

wherein, when said plurality of imaging devices are provided in the surrounding of said display apparatus and said object is place in front of said display apparatus, a front view image generating unit generates the front view of said object viewed from said display apparatus, and the mirror image of said object is displayed on said display apparatus.

19. A scenery generator comprising a scenery image generating unit for receiving input of a plurality of scenery images viewed from different viewpoints and generating a two-dimensional image viewing an object from a viewpoint given based on said images, a sensor for supplying the user's viewpoint position information to said scenery image generating unit, and a display apparatus for displaying an image based on the output from said scenery image generating unit,

wherein said scenery image generating unit comprises:

a first feature point detection unit for receiving input of a first image, and detecting a feature point from said image;

a second feature point detection unit for receiving input of a second image, and detecting a feature point from said image;

a correlation calculating unit for receiving input of signals from said first feature point detection unit and said second feature point detection unit, and calculating the correlation between the feature point in said first image and the feature point in said second image;

a robust matching unit for receiving input of signals from said correlation calculating unit, and removing combinations of said feature points that have low probability based on the condition of an image seen from a plurality of viewpoints;

a match propagation unit for receiving input of a list of seed matches of the points of interest from said robust matching unit and outputting the matching of said first and second images;

a re-sampling unit for regularizing the matching from said match propagation unit, and outputting a list of binocular matches;

a two-view joint triangulation unit for receiving input of the list of binocular matches from said re-sampling unit, and outputting a two-view joint triangulation; and

a view interpolation unit for generating an image seen from a different view based on said two-view joint triangulation.

**20.** A seed finding unit for finding seed matches between a plurality of images of an object, comprising:

a feature point detection unit for receiving input of a plurality of images from said plurality of imaging devices, and detecting feature points from said images;

a correlation calculating unit for calculating the correlation between the feature points in said plurality of images and for calculating combinations of said feature points;

a matching unit for removing combinations of said feature points that have low probability based on the condition of an image seen from a plurality of viewpoints;

a camera orientation determining unit for determining the position of said plurality of viewpoints and the direction of viewing rays;

a match propagation unit for selecting those combinations of said feature points that are geometrically and statistically highly reliable under the constraints of the position of said plurality of viewpoints and the direction of viewing rays obtained by said camera orientation determining unit, and for adjusting the analysis range of the images of said object.

**21.** A seed finding unit for finding seed matches between a plurality of images of a common object, comprising:

a feature point detection unit for receiving input of a plurality of images from said plurality of imaging devices, and detecting feature points from said images;

a correlation calculating unit for calculating the correlation between the feature points in said plurality of images and for calculating combinations of said feature points;

a matching unit for removing combinations of said feature points that have low probability based on the condition of an image seen from a plurality of viewpoints;

a camera orientation determining unit for determining the position of said plurality of viewpoints and the direction of viewing rays;

a match propagation unit for selecting those combinations of said feature points that are geometrically and statistically highly reliable under the geometrical constraints of the viewing rays, and for adjusting the analysis range of the images of said object.

**22.** An image generating method for generating a new image from a plurality of images, comprising the steps of:

receiving a plurality of images;

calculating the correspondence between feature points of said plurality of images;

calculating the differences between corresponding feature points in said plurality of images;

sorting said feature points by the values of the differences; and

drawing said images in order from the smallest difference to the largest difference.

**23.** An image generating method for generating a new image from a plurality of images, comprising the steps of:

receiving input of a first image and detecting a feature point from said image;

receiving input of a second image and detecting a feature point from said image;

receiving input of a third image and detecting a feature point from said image;

calculating the correlation between the feature point in said first image and the feature point in said second image;

calculating the correlation between the feature point in said second image and the feature point in said third image;

removing combinations of said feature points that have low probability based on the condition of an image seen from a plurality of viewpoints (robust matching step);

determining the position of said plurality of viewpoints and the direction of viewing rays;

receiving input of a list of seed matches of the points of interest and camera orientation parameter, and outputting the matching of said first through third images;

regularizing the obtained matching and outputting a list of trinocular matches (re-sampling step);

receiving input of the list of trinocular matches and outputting a three-view joint triangulation; and

generating an image seen from a different view based on said three-view joint triangulation.

**24.** An image generating method for generating a new image from a plurality of images, comprising the steps of:

receiving input of a first image and detecting a feature point from said image;

receiving input of a second image and detecting a feature point from said image;

calculating the correlation between the feature point in said first image and the feature point in said second image;

removing combinations of said feature points that have low probability based on the condition of an image seen from a plurality of viewpoints (robust matching step);

receiving input of a list of seed matches of the points of interest and outputting the matching of said first through third images;

regularizing the obtained matching and outputting a list of binocular matches (re-sampling step);

receiving input of the list of binocular matches and outputting a two-view joint triangulation; and

generating an image seen from a different view based on said two-view joint triangulation.

**25.** A memory medium in computer-readable form storing a program for causing a computer to implement an image generating method for generating a new image from a plurality of images, the method comprising the steps of:

receiving a plurality of images;

calculating the correspondence between feature points of said plurality of images;

calculating the differences between corresponding feature points in said plurality of images;

sorting said feature points by the values of the differences; and

drawing said images in order from the smallest difference to the largest difference.

**26.** A memory medium in computer-readable form storing a program for causing a computer to implement an image generating method for generating a new image from a plurality of images, the method comprising the steps of:

receiving input of a first image and detecting a feature point from said image;

receiving input of a second image and detecting a feature point from said image;

receiving input of a third image and detecting a feature point from said image;

calculating the correlation between the feature point in said first image and the feature point in said second image;

calculating the correlation between the feature point in said second image and the feature point in said third image;

removing combinations of said feature points that have low probability based on the condition of an image seen from a plurality of viewpoints (robust matching step);

determining the position of said plurality of viewpoints and the direction of viewing rays;

receiving input of a list of seed matches of the points of interest and camera orientation parameter, and outputting the matching of said first through third images;

regularizing the obtained matching and outputting a list of trinocular matches (re-sampling step);

receiving input of the list of trinocular matches and outputting a three-view joint triangulation; and

generating an image seen from a different view based on said three-view joint triangulation.

**27.** A memory medium in computer-readable form storing a program for causing a computer to implement an image generating method for generating a new image from a plurality of images, the method comprising the steps of:

receiving input of a first image and detecting a feature point from said image;

receiving input of a second image and detecting a feature point from said image;

calculating the correlation between the feature point in said first image and the feature point in said second image;

removing combinations of said feature points that have low probability based on the condition of an image seen from a plurality of viewpoints (robust matching step);

receiving input of a list of seed matches of the points of interest and outputting the matching of said first through third images;

regularizing the obtained matching and outputting a list of binocular matches (re-sampling step);

receiving input of the list of binocular matches and outputting a two-view joint triangulation; and

generating an image seen from a different view based on said two-view joint triangulation.

28. A method of generating an image from a plurality of images corresponding to a plurality of different viewpoints by processing signals corresponding to the images, the method comprising identifying feature points in each of said plurality of images, calculating correlations between feature points in different images, using probable matches of feature points together with information about the viewpoints to perform matching, and performing joint triangulation to produce a multi-view joint triangulation.

29. A method of generating an image from a plurality of images by processing signals corresponding to the images, the method comprising identifying and matching respective feature points in each image, calculating the change in position of feature points between the images and using the change in position as an indication of depth.

30. A computer program for performing a method as claimed in any one of claims 22-24, 28 and 29.

31. A computer-readable storage medium storing a computer program as claimed in claim 30.

# FIG. 1

OBTAIN TWO OR MORE IMAGES A, B, …
SEEN FROM TWO OR MORE DIFFERENT
VIEWPOINTS — S1

↓

CALCULATE CORRESPONDENCE BETWEEN
FEATURE POINTS IN IMAGES A, B, … — S2

↓

CALCULATE DIFFERENCES BETWEEN
CORRESPONDING FEATURE POINTS IN
IMAGES A, B, … — S3

↓

SORT BY DIFFERENCE — S4

↓

DRAW IN ORDER FROM SMALL TO LARGE
DIFFERENCE — S5

# F I G. 2

EP 1 063 614 A2

# FIG. 3

# FIG. 4

100b

100a

100c

100

# F I G. 5

# FIG 6

(a)

(b)

# F I G. 7

(a)

(b)

# F I G. 8

(a)

W

b

c

(b)

(c)

# FIG. 9

PLURALITY OF IMAGES SEEN FROM DIFFERENT VIEWPOINTS

SCENERY GENERATING UNIT — 2

CORRESPONDING POINT SEARCHING UNIT — 2a

GEOMETRICAL CALCULATION UNIT — 2b

SIGNAL PROCESSING UNIT (PC) — 3

LCD — 4

5

USER POSITION INFORMATION

COMMUNICATIONS MEANS — 7

EP 1 063 614 A2

# F I G. 10

| FIRST IMAGE | SECOND IMAGE | THIRD IMAGE |
|---|---|---|

```
          10a                    10b                    10c
┌─────────────────┐    ┌─────────────────┐    ┌─────────────────┐
│  FEATURE POINT  │    │  FEATURE POINT  │    │  FEATURE POINT  │
│ DETECTION UNIT  │    │ DETECTION UNIT  │    │ DETECTION UNIT  │
└─────────────────┘    └─────────────────┘    └─────────────────┘
```

11a

11b

┌─────────────────┐    ┌─────────────────┐
│ CORRELATION UNIT │    │ CORRELATION UNIT │
└─────────────────┘    └─────────────────┘

SEED FINDING
UNIT

┌─────────────────────────┐
│  ROBUST MATCHING UNIT    │ 12
└─────────────────────────┘

┌─────────────────────────┐
│  CAMERA ORIENTATION      │ 13
│  AUTO-DETERMINATION UNIT │
└─────────────────────────┘

┌─────────────────────────┐
│  CONSTRAINT MATCH        │ 14
│  PROPAGATION UNIT        │
└─────────────────────────┘

┌─────────────────────────┐
│  RE-SAMPLING UNIT        │ 15
└─────────────────────────┘

┌─────────────────────────┐
│  THREE-VIEW JOINT        │ 16
│  TRIANGULATION UNIT      │
└─────────────────────────┘

┌─────────────────────────┐
│  VIEW INTERPOLATION UNIT │ 17
│  (NEW IMAGE GENERATING UNIT) │
└─────────────────────────┘

# F I G . 11

PROCEDURES OF DETERMINING
CAMERA ORIENTATIONS

CONVERT 2 D AFFINE CAMERA TO
1 D PROJECTIVE CAMERA — S11

EXTRACT EPIPOLES — S12

DETERMINE CAMERA MATRICES
AND CAMERA CENTERS — S13

UPDATE PROJECTIVE STRUCTURE — S14

DETERMINE CAMERA ORIENTATION
PARAMETERS — S15

# F I G . 12

PROCEDURES OF MATCH PROPAGATION

REMOVE MATCH WITH BEST Z N C C
SCORE FROM INITIAL SEED MATCHES — S21

FIND NEW MATCH IN "MATCH NEIGHBORHOOD"
AND ADD TO MATCH SET — S22

# F I G. 13

FIRST IMAGE                    SECOND IMAGE

20a                            20b

FEATURE POINT                  FEATURE POINT
DETECTION UNIT                 DETECTION UNIT

21a — CORRELATION UNIT

BINOCULAR SEED
FINDING UNIT

ROBUST MATCHING UNIT — 22

CONSTRAINT MATCH
PROPAGATION UNIT — 23

RE-SAMPLING UNIT — 24

TWO-VIEW JOINT
TRIANGULATION UNIT — 25

VIEW INTERPOLATION UNIT — 26

# FIG.14

FIRST IMAGE      SECOND IMAGE      THIRD IMAGE

| FEATURE POINT DETECTION UNIT | 30a |
| FEATURE POINT DETECTION UNIT | 30b |
| FEATURE POINT DETECTION UNIT | 30c |

31a      CORRELATION UNIT      CORRELATION UNIT      31b

ROBUST MATCHING UNIT ——32

CONSTRAINT MATCH PROPAGATION UNIT ——33

RE-SAMPLING UNIT ——34

THREE-VIEW JOINT TRIANGULATION UNIT ——35

VIEW INTERPOLATION UNIT ——36

# F I G. 15

# F I G. 16

BASE IMAGE
REFERENCE IMAGE

# F I G.17

EPIPOLAR GEOMETRY